# DEMANDE DE BREVET EUROPEEN

(11) **EP 0 534 868 A1**
(43) Date de publication de la demande: **31.03.1993**
(21) Numéro de dépôt: 92420297.1
(22) Date de dépôt: 08.09.1992
(51) Int. Cl.: H02H 1/06, H02H 1/00

(54) **Déclencheur électronique comportant des moyens de communication**

(30) Priorité: 26.09.1991 FR 9111977
(71) Demandeur: SCHNEIDER ELECTRIC SA, F-92100 Boulogne-Billancourt (FR)
(72) Inventeur: Dousse, Gilles, Marlin Gerin, F-38050 Grenoble Cedex 9 (FR)
(74) Mandataire: Jouvray, Marie-Andrée

(57) **Abrégé**

Le circuit de communication (8) du déclencheur à propre courant est inhibé par le microprocesseur (7) du déclencheur lorsque les valeurs des courants mesurés (Ir,Is,It) sont inférieures à des valeurs prédéterminées. Le microprocesseur émet un bit, dit bit d'économie d'énergie, avant d'inhiber le circuit de communication de manière à informer un dispositif de surveillance (9) connecté au déclencheur de la cause de l'interruption de la transmission en provenance du déclencheur.

## Description

L'invention concerne un déclencheur électronique réalisant des fonctions de protection et diverses fonctions annexes, comportant des moyens de mesure du courant traversant un ou des conducteurs d'un réseau à surveiller, une alimentation à propre courant connectée aux moyens de mesure, et un ensemble de traitement comportant des moyens de communication destinés à transmettre des informations en direction d'un dispositif de surveillance, des moyens de comparaison du courant à des valeurs prédéterminées et des moyens d'inhibition pour inhiber des fonctions annexes prédéterminées lorsque le courant est inférieur auxdites valeurs de manière à réaliser une économie d'énergie dans le déclencheur.

L'invention a pour but un perfectionnement d'un déclencheur de ce type pour en permettre la télésurveillance.

Le déclencheur selon l'invention est caractérisé en ce que, lorsque le courant est inférieur auxdites valeurs prédéterminées,les moyens d'inhibition contrôlent l'émission par les moyens de communication d'un bit d'économie d'énergie avant d'inhiber les moyens de communication.

L'émission d'un bit d'économie d'énergie avant l'inhibition des moyens de communication permet au dispositif de surveillance de ne pas interprêter de la même façon une panne du déclencheur ou du circuit de transmission et une inhibition volontaire des moyens de communication lorsque,le courant est très faible.

Selon un développement de l'invention, les moyens de communication émettent périodiquement un quartet comportant le bit d'économie d'énergie et fournissant des informations prédéterminées au dispositif de surveillance.

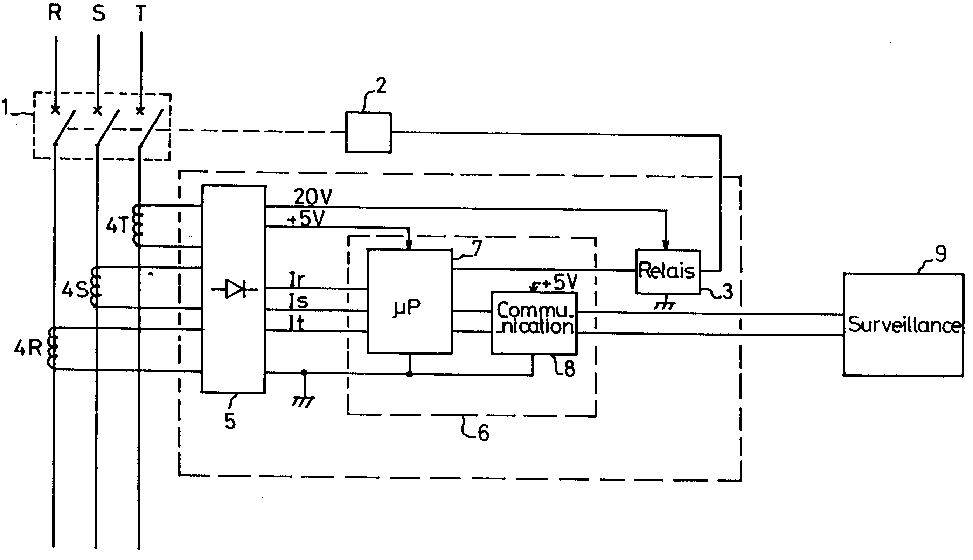

D'autres avantages et caractéristiques ressortiront plus clairement de l'exposé qui va suivre d'un mode particulier de réalisation de l'invention donné à titre d'exemple non limitatif et représenté au dessin annexé sur lequel la figure unique représente un schéma-bloc d'un déclencheur dans lequel l'invention est mis en oeuvre.

Sur la figure, un disjoncteur 1 de protection de lignes R,S et T d'un réseau alternatif triphasé est actionné par un mécanisme de commande 2 piloté par un relais polarisé 3 de manière à commander le déclenchement du disjoncteur en cas de surcharge, de court-circuit ou de défaut à la terre.

L'intensité du courant dans chaque ligne est détectée par un transformateur de courant 4R,4S ou 4T. Les enroulements secondaires des transformateurs de courants sont connectés à un circuit 5 de détection et de redressement qui fournit à un ensemble électronique de traitement 6 du déclencheur des signaux Ir,Is,It, représentatifs des courants de phase ainsi qu'une tension d'alimentation (5V) dans le cas d'un déclencheur à propre courant. Le circuit 5 fournit également une tension d'alimentation (20V sur la figure) au relais 3. L'ensemble électronique de traitement 6 assure, de manière connue, les fonctions de déclenchement long retard, court retard et instantané de manière à élaborer un ordre de déclenchement du disjoncteur lors d'un dépassement de seuils prédéterminés. L'ordre de déclenchement ainsi produit est appliqué au relais polarisé 3 de manière à actionner le disjoncteur.

De tels ensembles de traitement sont bien connus, qu'ils soient du type analogique ou du type numérique à microprocesseur.

L'ensemble électronique de traitement 6 assure également diverses fonctions annexes. A titre d'exemple non limitatif de telles fonctions peuvent inclure des fonctions (non représentées) d'affichage, de signalisation de type de défaut, de délestage, etc...

Sur la figure on n'a représenté que les éléments de l'ensemble de traitement 6 nécessaires à la compréhension de l'invention, à savoir un microprocesseur 7 et un circuit de communication 8. Tous deux sont alimentés (5V) par le circuit d'alimentation du circuit 5. Le microprocesseur fournit au circuit de communication des informations à transmettre à un dispositif de surveillance extérieur 9. Le circuit de communication transmet périodiquement au dispositif de surveillance 9, par exemple toutes les quelques millisecondes, un certain nombre d'informations, considérées comme essentielles, par exemple sous forme d'un quartet (4 bits). A titre d'exemple ces informations sont notamment représentatives. de l'état de prédéclenchement du déclencheur. Dans un mode de réalisation préférentiel un quartet sur deux contient ces informations.

En cas de défaut dans le réseau à surveiller, le microprocesseur fournit une indication de défaut (état de prédéclenchement) au circuit de communication 8, qui le transmet au dispositif de surveillance 9. Après déclenchement, l'alimentation à propre courant disparait et la transmission d'informations vers le dispositif de surveillance 9 est interrompue. Le dispositif de surveillance 9 peut donc faire la distinction entre une interruption de la communication due à la commande d'un déclenchement par le déclencheur et une interruption de la communication due à d'autres raisons, aucun bit de prédéclenchement n'étant alors transmis avec les derniers quartets.

Pour un déclencheur à propre courant, lorsque le courant dans le réseau est très faible, l'alimentation peut devenir insuffisante. Il a déjà été proposé d'inhiber certaines fonctions annexes, grosses consommatrices d'énergie, comme l'affichage, lorsque le courant est inférieur à certaines valeurs prédéterminées,réalisant ainsi une économie d'énergie. Seules les fonctions essentielles du déclencheur, fonctions de protection, sont alors maintenues. Dans le déclencheur représenté, la fonction communication est inhibée lorsque la somme des courants dans les différentes phases est inférieure à 0,44In, In étant le courant nominal du disjoncteur. Dans un mode de réalisation préférentiel, le circuit de communication 8 fonctionne dès que l'un des courants de phase (Ir,Is ou It) est supérieur à 0,44In, ou dès que deux des courants de phase sont supérieurs à 0,22In, ou lorsque l'un des courants de phase étant supérieur à 0,22In, les deux autres sont supérieurs à 0,11In.

En l'absence de mesure spécifique le dispositif de surveillance 9 ne peut faire la différence entre une interruption de la communication volontaire correspondant à une économie d'énergie dans le déclencheur et une interruption due à une panne du déclencheur ou du circuit de transmission. Pour lui permettre une telle distinction un bit d'économie d'énergie est émis par le microprocesseur et transmis par le circuit de communication avec le quartet contenant les informations essentielles avant que le microprocesseur n'inhibe le circuit de communication et éventuellement d'autres fonctions annexes prédéterminées. Ce bit d'économie d'énergie constitue de préférence l'un des 4 bits de ce quartet. Si la communication est interrompue alors que les derniers quartets ne comportent ni bit de prédéclenchement ni bit d'économie d'énergie, le dispositif de surveillance 9 l'interprête comme une défaillance du déclencheur ou du circuit de transmission à moins qu'une information, transmise par d'autres voies, ne lui indique que le réseau a été ouvert par un autre disjoncteur, ou éventuellement que le disjoncteur a été ouvert manuellement.

Bien entendu, l'invention n'est pas limitée à un disjoncteur tripolaire, mais s'applique aussi bien à un disjoncteur monopolaire ou **multiphasé**.

## Revendications

1. Déclencheur électronique réalisant des fonctions de protection et diverses fonctions annexes, comportant des moyens (4R,4S,4T) de mesure du courant traversant un ou des conducteurs (R,S,T) d'un réseau à surveiller, une alimentation (5) à propre courant connectée aux moyens de mesure, et un ensemble de traitement (6) comportant des moyens de communication (8) destinés à transmettre des informations en direction d'un dispositif de surveillance(9), des moyens (7) de comparaison du courant à des valeurs prédéterminées et des moyens (7) d'inhibition pour inhiber des fonctions annexes prédéterminées lorsque le courant est inférieur auxdites valeurs de manière à réaliser une économie d'énergie dans le déclencheur, déclencheur caractérisé en ce que, lorsque le courant est inférieur auxdites valeurs prédéterminées, les moyens d'inhibition (7) contrôlent l'émission par les moyens de communication d'un bit d'économie d'énergie avant d'inhiber les moyens de communication (8).

2. Déclencheur selon la revendication 1, caractérisé en ce que les moyens de communication (8) émettent périodiquement un quartet comportant le bit d'économie d'énergie et fournissant des informations prédéterminées au dispositif de surveillance.

3. Déclencheur selon l'une des revendications 1 et 2, caractérisé en ce que lesdites fonctions annexes prédéterminées sont inhibées lorsque la somme des courants traversant les conducteurs du réseau est inférieure à une valeur prédéterminée.

4. Déclencheur selon l'une quelconque des revendications 1 à 3, caractérisé en ce que les moyens de comparaison et d'inhibition sont constitués par un microprocesseur (7) qui réalise également les fonctions de protection.
